# EUROPEAN PATENT SPECIFICATION

(11) **EP 2 492 767 B1**
(45) Date of publication and mention of the grant of the patent: **08.09.2021**
(21) Application number: 11186856.8
(22) Date of filing: 27.10.2011
(51) Int. Cl.: G05B 19/418, G05B 23/02

(54) **Inspection system, management server, inspection apparatus and method for managing inspection data**
System zur Inspektion, Management Server, Gerät zur Inspektion und Verfahren zur Verwaltung von Inspektionsdaten
Système d'inspection, serveur de gestion, appareils d'inspection et méthode de gestion des données d'inspection

(30) Priority: 25.02.2011 JP 2011040510
(43) Date of publication of application: 29.08.2012
(73) Proprietor: OMRON Corporation, Shiokoji-dori, Shimogyo-Ku Kyoto Kyoto 600-8530 (JP)
(72) Inventor: Kawata, Akihiro, Kyoto, Kyoto 600-8530 (JP); Sato, Tsuyoshi, Kyoto, 600-8530 (JP); Hisaizumi, Takuya, Kyoto, Kyoto 600-8530 (JP)
(74) Representative: Horn Kleimann Waitzhofer Patentanwälte PartG mbB

(56) References cited:
- EP-A1- 1 729 251
- US-A1- 2005 052 197
- US-A1- 2006 271 226
- None

## Description

### TECHNICAL FIELD

The present invention relates to an inspection system and a method for managing inspection data, and in particular to an inspection system that manages data of inspection results from inspecting products that are produced in a factory or the like and a method for managing inspection data that are used in such an inspection system.

### RELATED ART

When producing products in a factory or the like, it is common that the production is carried out through a plurality of steps. Moreover, individual processing conditions are set for each of the steps. A production system that collects, among others, the processing conditions at each step and the inspection result data, which is the data of the results of inspecting the products in each step, is disclosed for example in JP 2007-157061 A (Patent Document 1).

According to Patent Document 1, the production system collects the data for the purpose of preempting defective products by ascertaining the processing conditions and the inspection result data of products that have been judged to be defective as a result of the inspection.
US 2006/271226 A1 discloses an information processing device storing an extracted feature of each inspection item of a process inspection, and a determination result of a final inspection in a memory device, calculating a separation degree between a distribution of features of products which were determined as good products at the final inspection and a distribution of features of products which were determined as defective products at the final inspection for every inspection item, selecting an inspection item whose inspection standard is to be reset from the inspection items or the combinations of the inspection items based on a value of the separation degree.
EP 1 729 251 A1 discloses a process management apparatus that allows even a user with a low level of technical skills to accurately and quickly estimate a failure factor when a failure occurs in an object of processing due to a failure of processing in a processing system that performs processing for the object. An estimation processor reads out information on conditions leading to failure factors from an estimation knowledge recording section and presents the conditions to a user as questions in order.

### RELATED ART DOCUMENTS

### PATENT DOCUMENTS

[Patent Document 1] JP 2007-157061A

### SUMMARY OF THE INVENTION

### PROBLEMS TO BE SOLVED BY THE INVENTION

Here, the production system disclosed in Patent Document 1 is configured to include an operation control computer that includes a data memory in which the processing conditions of each step are stored, a data collection computer that cycles and collects the data written into the operation control computer, and a DB (database) server that stores the data collected by the data collection computer.

That is to say, in Patent Document 1, the production system is configured to store the processing conditions in a data memory. When this configuration is applied to the inspection of a substrate on the top of which electronic components are mounted, for example, then there is a large number of process steps and a broad variety of inspection items in each process step for the inspection of the substrate, so that there is a massive amount of data, and this massive amount of data is stored in the data memory. In this case, there is the risk that the consistency of the data stored in the data memory and the association of the data of the various process steps becomes very complex.

Moreover, when trying to manage the inspection result data from a large number of inspection apparatuses with one database as with a DB server, there is the risk that there is a concentration in the processes of colleting the data, and the processes for collecting from certain inspection apparatuses affect the processes for collecting from other inspection apparatuses.

It is an object of the present invention to provide an inspection system that can efficiently manage the data obtained from a plurality of apparatuses, as well as a method for managing inspection data that can be used in such an inspection system.

### MEANS FOR SOLVING THE PROBLEM

The above object is solved by the inspection data management method according to claim 1 and the inspection system according to claim 5. Embodiments of the invention are described in the dependent claims. An inspection system according to an aspect includes a plurality of inspection apparatuses to inspect products, and a management server connected to the inspection apparatuses via a communication line. The inspection apparatuses each include an inspection means for inspecting products; an inspection apparatus-side storage means for storing inspection result data representing a result of an inspection with the inspection means, the inspection apparatus-side storage means being a key-value database; and a sending means for sending the inspection result data stored by the inspection apparatus-side storage means to the management server. The management server includes a receiving means for receiving the inspection result data sent by the sending means; and a server-side storage means for storing the inspection result data received by the receiving means.

With this configuration, the inspection system can store the inspection result data in key-value databases in the inspection apparatuses. In this case, it is possible to store the inspection result data in a format that is easy to search, even if there is a lot of inspection result data. Moreover, since the databases are provided on the inspection apparatus side, a large amount of inspection result data can be held on the inspection apparatus side, and it is possible to send the inspection result data at an appropriate timing of the inspection apparatuses, without the need to send the inspection result data to the management server immediately after the inspection. Consequently, also in a state in which a plurality of inspection apparatuses are connected to the management server, there is no concentration of the processing of the sending of the inspection result data. As a result, it is possible to efficiently manage the data obtained by the plurality of inspection apparatuses.

The server-side storage means comprises a key-value database and a relational database; and the management server comprises an inspection information storage means for storing information relating to an inspection of a product by the inspection apparatus; and a conversion means for converting the inspection result data received with the receiving means into relational data, based on the information relating to the inspection of the product stored in the inspection information storage means. Thus, since a key-value database is also provided on the side of the management server, it is easy to store the inspection result data that has been temporarily stored in the inspection apparatus without converting its type on the management server side. Consequently, since there is no need for processing entailing a load on the management server side, it is possible to perform stable processing when receiving and storing the inspection result data on the management server side and to shorten the processing time, even when the inspection result data are sent from a plurality of inspection apparatuses. Moreover, since the inspection result data is converted from key-value data to relational data on the management server side, it is possible to perform the detailed aggregation of the inspection result data using a relational database. Moreover, the conversion into a relational database can be carried out based on information relating to the product inspection with the inspection apparatuses, so that a suitable conversion can be carried out based on the inspection.

More preferably, the management server includes an analysis means for analyzing the inspection result data converted by the conversion means. Thus, it is possible to analyze the inspection result on the management server side. Consequently, it is possible to use a relational database when analyzing the inspection result, so that a detailed analysis can be carried out.

More preferably, the information relating to the inspection of the product stored in the inspection information storage means is associated among the plurality of inspection apparatuses. Thus, when analyzing the inspection results, the inspection results of a plurality of inspection apparatuses can be linked and analyzed.

More preferably, the inspection means includes an image obtaining means for obtaining data of an image of the product when inspecting the product, and the inspection apparatuses each include a holding means for holding the data of the image of the product obtained by the image obtaining means; and an image control means for controlling the data of the image of the product held by the holding means in accordance with the result of the analysis with the analysis means. Thus, it is possible to suitably process the image data. For example, there will be no situation in which the image data is left on the inspection apparatus side.

Another aspect relates to a management server that can be connected via a communication line to a plurality of inspection apparatuses to inspect products. The management server includes a receiving means for receiving inspection result data sent from the plurality of inspection apparatuses, the inspection result data being key-value data; and a server-side storage means for storing the inspection result data received by the receiving means, the server-side storage means being a key-value database.

With this configuration, the management server is configured to include a key-value database, so that it is easy to store the key-value inspection result data from the inspection apparatuses as it is without performing a type conversion. Consequently, since there is no need for processing entailing a load on the management server side, it is possible to perform stable processing when receiving and storing the inspection result data on the management server side and to shorten the processing time, even when the inspection result data are sent from a plurality of inspection apparatuses. As a result, it is possible to efficiently manage with the management server the data obtained from the plurality of apparatuses.

Yet another aspect relates to an inspection apparatus to inspect products, the inspection apparatus being connectable to a management server and comprising an inspection means for inspecting products; an inspection apparatus-side storage means for storing inspection result data representing a result of an inspection with the inspection means, the inspection apparatus-side storage means being a key-value database; and a sending means for sending the inspection result data stored by the inspection apparatus-side storage means to the management server.

Thus, the inspection apparatus can store inspection result data in a key-value database. In this case, it is possible to store the inspection result data in a format that is easy to search, even if there is a lot of inspection result data. Moreover, a large amount of inspection result data can be held, and it is possible to send the inspection result data at an appropriate timing of the inspection apparatus, without the need to send the inspection result data to the management server immediately after the inspection. Consequently, also in a state in which a plurality of inspection apparatuses are connected to the management server, there is no concentration of the processing of the sending of the inspection result data. As a result, it is possible to efficiently manage the data.

Yet another aspect relates to an inspection data management method. The inspection data management method includes a step of inspecting a product with an inspection apparatus for inspecting products; a step of storing inspection result data representing a result of an inspection with the inspection apparatus in a key-value database; a step of sending the inspection result data stored by the inspection apparatus to a management server; a step of receiving, with the management server, the inspection result data sent by the inspection apparatus; and a step of storing the received inspection result data with the management server.

Thus, with this inspection data management method, the inspection result data can be stored in a key-value database. In this case, it is possible to store the inspection result data in a format that is easy to search, even if there is a lot of inspection result data. Moreover, since the databases are provided on the inspection apparatus side, a large amount of inspection result data can be held on the inspection apparatus side, and it is possible to send the inspection result data at an appropriate timing of the inspection apparatuses, without the need to send the inspection result data to the management server immediately after the inspection. Consequently, also in a state in which a plurality of inspection apparatuses are connected to the management server, there is no concentration of the processing of the sending of the inspection result data. As a result, it is possible to efficiently manage the data obtained by the plurality of inspection apparatuses.

### EFFECT OF THE INVENTION

With the present invention, an inspection system can store inspection result data in a key-value database in an inspection apparatus. In this case, it is possible to store the inspection result data in a format that is easy to search, even if there is a lot of inspection result data. Moreover, since the databases are provided on the inspection apparatus side, a large amount of inspection result data can be held on the inspection apparatus side, and it is possible to send the inspection result data at an appropriate timing of the inspection apparatuses, without the need to send the inspection result data to the management server immediately after the inspection. Consequently, also in a state in which a plurality of inspection apparatuses are connected to the management server, there is no concentration of the processing of the sending of the inspection result data. As a result, it is possible to efficiently manage the data obtained by the plurality of inspection apparatuses.

### BRIEF DESCRIPTION OF THE DRAWINGS

- Fig. 1: is a block diagram showing an inspection system according to one embodiment of the invention.
- Fig. 2: is a diagram illustrating an example of the configuration of the data in the apparatus-side inspection result DB.
- Fig. 3: is a flowchart showing the operation of an inspection apparatus.
- Fig. 4: is a flowchart showing the operation of an inspection apparatus.
- Fig. 5: is a flowchart showing the operation of the management server.
- Fig. 6: is a flowchart showing the operation of the management server.
- Fig. 7: is a diagram showing an example of the inspection result data stored in the apparatus-side inspection result DB.
- Fig. 8: is a diagram showing an example of the inspection result data stored in the server-side inspection result DB.
- Fig. 9: is a diagram illustrating the state of the data of the statistical analysis DB prior to storing.
- Fig. 10: is a diagram illustrating the state of the data in the statistical analysis DB after the storing.
- Fig. 11: is a diagram showing an example of the inspection results of the inspection apparatuses and of the processing of image data depending on the inspection results.
- Fig. 12: is a diagram showing an example of inspection result data stored in the apparatus-side inspection result DB of the inspection apparatus.
- Fig. 13: is a diagram illustrating the state of the stored statistical analysis DB.
- Fig. 14: is a diagram illustrating information relating to the substrate inspection stored in the solder attachment inspection machine.
- Fig. 15: is a diagram illustrating information relating to the substrate inspection contained in the mounting inspection machine.
- Fig. 16: is a diagram illustrating information relating to the substrate inspection contained in the solder inspection machine.
- Fig. 17: is a diagram illustrating information relating to substrate inspection stored in the management server.

### EMBODIMENTS OF THE INVENTION

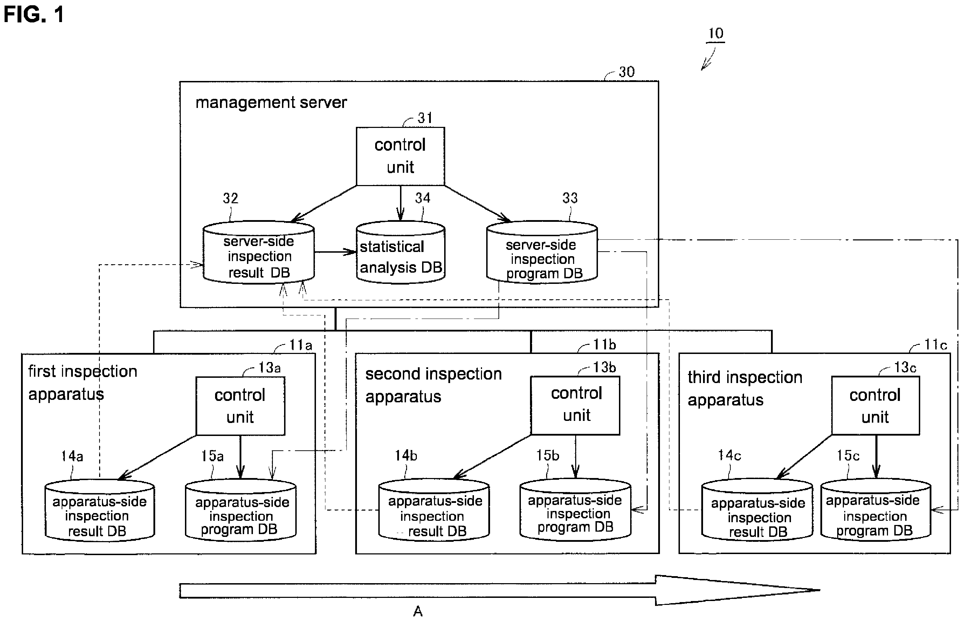

Referring to the drawings, the following is an explanation of an inspection system according to embodiments of the present invention. Fig. 1 is a block diagram showing an inspection system 10 according to one embodiment of the invention. As shown in Fig. 1, the inspection system 10 is a system that can be applied to a production line for producing a product in a factory or the like. The inspection system 10 includes a first inspection apparatus 11a, a second inspection apparatus 11b, and a third inspection apparatus 11c, which inspect products produced in the factory, as well as a management server 30 that is connected via a communication line to the first to third inspection apparatuses 11a, 11b and 11c. In this embodiment, the inspection system 10 is applied to a production line in which electronic components are mounted onto a substrate.

The first to third inspection apparatuses 11a, 11b and 11c are respectively provided at the individual steps for producing the product. The steps of mounting the electronic product onto the substrate in this embodiment are, for example, a printing step of printing lands or the like on the substrate, a mounting step of mounting the electronic components on the substrate, and a reflowing step of soldering terminals of electronic components to the lands. Then, the first inspection apparatus 11a is arranged at the position of the printing step, and carries out the post-printing inspection. The second inspection apparatus 11b is arranged at the position of the mounting step, and carries out the post-mounting inspection. The third inspection apparatus 11c is arranged at the position of the reflowing step, and carries out the post-soldering inspection. Note that the arrow A in Fig. 1 indicates the forward direction in the production line.

The following is an explanation of the configuration of the first inspection apparatus 11a. The first inspection apparatus 11a includes a control unit 13a, an apparatus-side inspection result DB (database) 14a serving as an inspection apparatus-side storage means, and an apparatus-side inspection program DB 15a. The control unit 13a includes a CPU (central processing unit) that controls the overall first inspection apparatus 11a, an interface unit serving as a communication interface with the outside, and a memory, for example. The apparatus-side inspection program DB 15a stores information concerning the inspection of the substrate. It should be noted that also the second inspection apparatus 11b and the third inspection apparatus 11c have the same configuration, so that their further explanation is omitted.

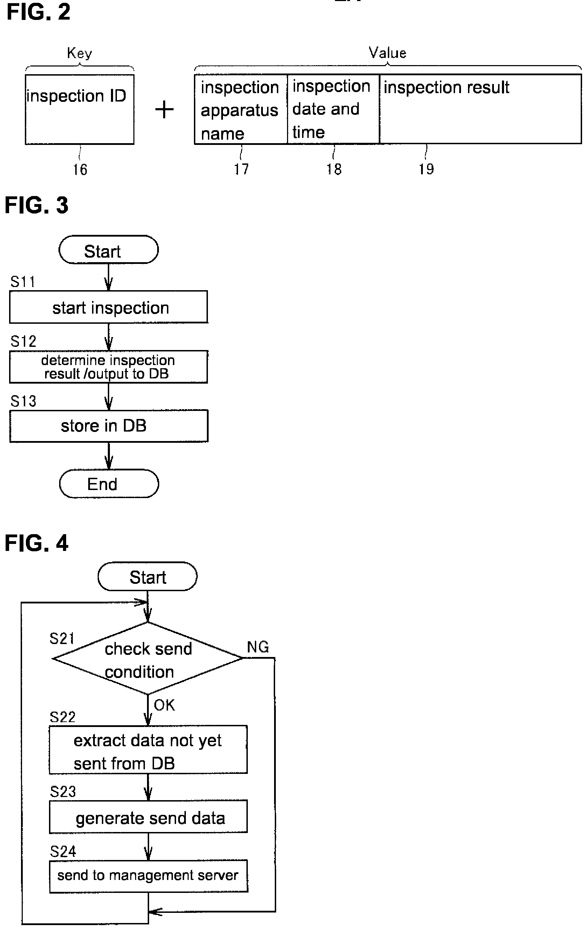

The apparatus-side inspection result DB 14a stores the inspection result data, which is data representing the results of inspecting the substrate with the first inspection apparatus 11a. The apparatus-side inspection result DB 14a is a key-value database constituted by keys and values. Fig. 2 is a diagram illustrating an example of the configuration of the data in the apparatus-side inspection result DB 14a. A shown in Fig. 2, the database contains keys, which are search keys for searching the database, and values, which is data associated with the keys. Here, it contains as a key, an inspection ID 16, which is information specifying the substrate that is subjected to inspection, and, as the values, an inspection apparatus name 17, an inspection date and time 18 and an inspection result 19. The inspection apparatus name 17 is information indicating which of the first to third inspection apparatuses 11a to 11c has carried out the inspection. The inspection date and time 18 is information on the date of the inspection. The inspection result 19 is information indicating the result of the inspection, i.e. good or poor or the like.

Moreover, also the apparatus-side inspection program DB 15a is a key-value database. The apparatus-side inspection program DB 15a stores information regarding the inspection of substrates. Here, the information regarding the inspection of substrates is information indicating the inspection conditions and the like, and contains for example information specifying specific positions on the substrate subjected to inspection, information indicating specific components, or information on inspection criteria for determining whether a substrate is good or poor.

The management server 30 includes a control unit 31, a server-side inspection result DB 32, a server-side inspection program DB 33, and a statistical analysis DB 34. The control unit 31 includes a CPU that controls the overall management server 30, an interface unit serving as a communication interface with the outside, and a memory, for example. The server-side inspection result DB 32 serves as a server-side storage means. The server-side inspection program DB 33 serves as an inspection information storage means for storing information relating to the inspection of the substrates. The statistical analysis DB 34 serves as a server-side storage means for storing statistics and analyses of the inspection result data, based on the server-side inspection result DB 32 and the server-side inspection program DB 33.

Like the apparatus-side inspection result DB 14a, the server-side inspection result DB 32 is a key-value database. The server-side inspection result DB 32 stores the key-value inspection result data received from the first to third inspection apparatuses 11a to 11c. It should be noted that the dotted lines in Fig. 1 indicate a state in which information is sent from the first to third inspection apparatuses 11a to 11c.

Similarly, also the server-side inspection program DB 33 is a key-value database. The server-side inspection program DB 33 stores the same information as the information relating to the inspection of substrates stored in the first to third inspection apparatuses 11a to 11c. For example, in the server-side inspection program DB 33, information relating to the inspection of substrates with the first to third inspection apparatuses 11a to 11c is stored, and by forwarding information corresponding respectively to the first to third inspection apparatuses 11a to 11c at a predetermined timing, it stores the same information as the first to third inspection apparatuses 11a to 11c.

The statistical analysis DB 34 is a relational database. The control unit 31 converts the inspection result data stored in the server-side inspection result DB 32 from key-value to relational, and the statistical analysis DB 34 stores the converted inspection result data.

That is to say, the management server 30 is configured to include two databases of different types, that is, a key-value database and a relational database.

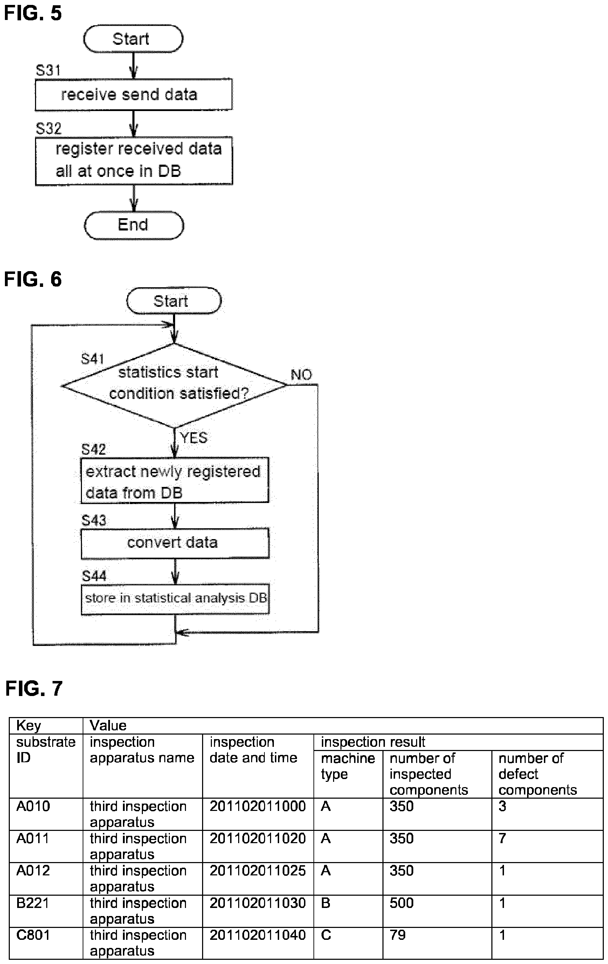

Here, the case was explained that, using the inspection system 10, substrates are examined with the first to third inspection apparatuses 11a to 11c, and the inspection result data are managed by the management server 30. Figs. 3 and 4 are flowcharts illustrating the operation of the first to third inspection apparatuses 11a to 11c. Figs. 5 and 6 are flowcharts illustrating the operation of the management server 30. Note that here, an example of the operation of the third inspection apparatus 11c is explained.

First, as shown in Fig. 3, when a substrate on which the reflow step has been finished is conveyed, for example by a belt conveyor, to a predetermined position, the third inspection apparatus 11c starts the inspection of the substrate (Step S11 in Fig. 3; in the following, "Step" may be omitted). More specifically, the third inspection apparatus 11c is an image inspection apparatus, and based on the information relating to the substrate inspection stored in the apparatus-side inspection program DB 15c, image data of the substrate is obtained. Here, the control unit 13c functions as an image obtaining means. Moreover, using the obtained image data and based on the information relating to the substrate inspection stored in the apparatus-side inspection program DB 15c, the third inspection apparatus 11c performs an inspection, for example whether the soldering has been properly performed with the control unit 13c, and stores the inspection result data in the apparatus-side inspection result DB 14c. At this time, it is ascertained as the inspection result for example how many of the components provided on the substrate are judged to be defective in that they are not soldered properly (number of defective components). Here, the control unit 13c functions as an inspection means. Then, the control unit 13c associates the substrate ID with the inspection result, as in the configuration of the inspection result data shown in Fig. 2 above, outputs them to the apparatus-side inspection result DB 14c (S12), and stores them in the apparatus-side inspection result DB 14c (S13). Then, the third inspection apparatus 11c repeats this substrate inspection as noted in S11 to S13 for each of the conveyed substrates. Fig. 7 is a diagram showing an example of the inspection result data stored in the apparatus-side inspection result DB 14c. As shown in Fig. 7, the substrate ID is stored as the key in the apparatus-side inspection result DB 14c, whereas the inspection apparatus name, the inspection date and time and, as the inspection result, the number of defective components, the machine type and the number of components subjected to inspection (number of inspected components) are stored as the value associated with the substrate ID.

Referring now to Fig. 4, as the third inspection apparatus 11c repeatedly stores the inspection result data in the apparatus-side inspection result DB 14c, as shown in Figs. 3 and 7 noted above, it judges whether a sending condition for sending the inspection result data to the management server 30 is fulfilled or not (S21 in Fig. 4). More specifically, the control unit 13c monitors whether the inspection result data for a predetermined number has been stored in the apparatus-side inspection result DB 14c, and if it judges that the inspection result data for a predetermined number has been stored (OK in S21), then data that has not yet been sent to the management server 30 is extracted from the inspection result data stored in the apparatus-side inspection result DB 14c (S22). Then, send data to be sent to the management server 30 is generated, for example by compressing the extracted inspection result data (S23), and the generated send data is sent to the management server 30 (S24). Here, the control unit 13c functions as a sending means.

It should be noted that similarly, also the first inspection apparatus 11a and the second inspection apparatus 11b carry out the substrate inspection and send the inspection result data to the management server 30. At this time, the substrates are conveyed in the forward direction of the steps, so that the inspections may be carried out in the order of first inspection apparatus 11a, second inspection apparatus 11b, and third inspection apparatus 11c.

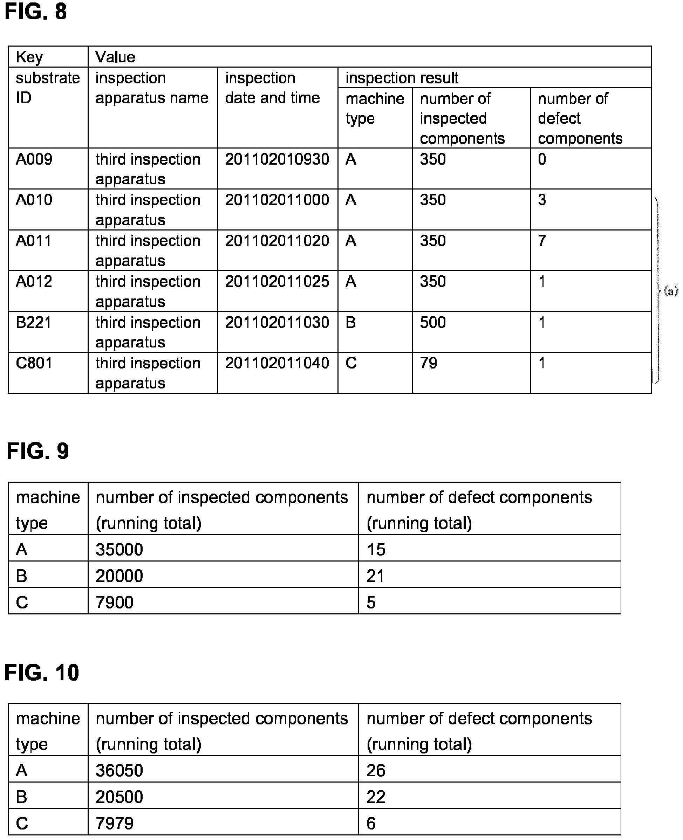

Thus, as shown in Fig. 5, the management server 30 receives the send data from the third inspection apparatus 11c (S31 in Fig. 5). Here, the control unit 31 functions as a receiving means. Moreover, the management server 30 registers the received send data all at once in the server-side inspection result DB 32 (S32). Fig. 8 is a diagram showing an example of the inspection result data stored in the server-side inspection result DB 32. The configuration of the data is similar to that in the above-described apparatus-side inspection result DB 14c in Fig. 7. The inspection result data that has been registered all at once includes the five sets of data indicated by (a) in Fig. 8.

Then, as shown in Fig. 6, the management server 30 monitors whether the condition for starting the process of the statistical analysis of the inspection result data is fulfilled in the server-side inspection result DB 32. The condition for starting the process of the statistical analysis is for example that new data has been registered in the server-side inspection result DB 32. Then, if it is judged that there is newly registered data, that is, if it is judged that the condition is satisfied (YES in S41 of Fig. 6), then the newly registered data is extracted (S42). Newly registered data is data that has not yet been stored from the server-side inspection result DB 32 to the statistical analysis DB 34, and here, it is the data indicated by (a) in Fig. 8, as noted above. Then, using the information relating to the substrate inspection stored in the server-side inspection program DB 33, the extracted data is converted from key-value to relational data (S43). Then, the statistical analysis is performed, and the result is stored in the statistical analysis DB 34 (S44). Here, the control unit 31 serves as a conversion means and an analysis means. Fig. 9 is a diagram illustrating the state of the data of the statistical analysis DB 34 prior to storing, and Fig. 10 is a diagram illustrating the state of the data in the statistical analysis DB 34 after the storing. Returning to Figs. 8 to 10, whereas the data is held as different data even for the same machine type for the inspected plurality of substrates in the server-side inspection result DB 32 in Fig. 8, the data may also be aggregated and held for each machine type in the statistical analysis DB 34, as shown in the statistical analysis DB 34 in Figs. 9 and 10. That is to say, using the inspection result data, and using the information relating to the substrate inspection stored in the server-side inspection program DB 33, the management server 30 performs a process of aggregating the data into the individual machine types as the analysis process, and shows the aggregated data in the statistical analysis DB 34.

Thus, the inspection system 10 can store the inspection result data in a key-value database in the inspection apparatuses 11a to 11c. In this case, even if there is a large amount of inspection result data, it is possible to store it in a format in which it can be easily searched. That is to say, it is possible to make the processing time when accessing the data base shorter, and to perform a high-speed process. Moreover, since the configuration is such that databases are provided on the side of the inspection apparatuses 11a to 11c, it is possible to hold a large amount of inspection result data on the side of the inspection apparatuses 11a to 11c, there is no need to send the inspection result data immediately after carrying out the inspection to the management server 30, and it is possible to send the inspection result data from the inspection apparatuses 11a to 11c at any time. Consequently, even when a plurality of inspection apparatuses 11a to 11c are connected to the management server 30, there is no concentration of the processes of sending the inspection result data. As a result, the data obtained from the plurality of inspection apparatuses 11a to 11c can be managed efficiently.

Moreover, since the inspection system 10 is configured to include a key-value database also in the management server 30, the inspection result data stored temporarily in the inspection apparatuses 11a to 11c can be easily stored as it is and without a type conversion or the like on the side of the management server 30. Consequently, it is not necessary to perform a process exerting a load on the side of the management server 30, so that even if inspection result data is sent from a plurality of inspection apparatuses 11a to 11c, it is possible to perform the process of receiving and storing the inspection result data on the side of the management server 30 in a stable manner, and to shorten the processing time. Moreover, since the inspection result data is converted from a key-value database to a relational database on the side of the management server 30, it is possible to perform the detailed aggregation of the inspection result data using a relational database. Moreover, since the data can be converted into a relational database based on information relating to the inspection of products with the inspection apparatuses 11a to 11c, it is possible to carry out a suitable conversion based on the inspection.

Note that in S21 in Fig. 4, if the inspection result data for a predetermined number of inspections is not stored (NO in S21), then the procedure waits until the inspection result data for the predetermined number of inspections is stored.

And in S41 in Fig. 6, if there is no newly registered data (NO in S41), then the procedure waits until data is newly registered.

It should be noted that the above embodiment has been explained for an example in which the first to third inspection apparatuses 11a to 11c are a first inspection apparatus 11a performing post-printing inspection, a second inspection apparatus 11b performing post-mounting inspection, and a third inspection apparatus 11c performing post-soldering inspection, but there is no limitation to this, and they may by any apparatus in a production line. For example, they may be inspection apparatuses for other inspections, such as X-ray inspection apparatuses. Moreover, the production line also may be a plurality of different inspection apparatuses.

Moreover, in the above-noted embodiment, an example was explained in which the timing at which the inspection result data is sent from the third inspection apparatus 11c to the management server 30 is the timing at which the inspection result data for a predetermined number is stored, but there is no limitation to this, and it is also possible to send the data at predetermined intervals, for example every five minutes, or at timings set freely by the user.

Moreover, in addition to the management server 30 and the inspection apparatuses 11a to 11c, the inspection system 10 may also be configured to include other devices, such as a display apparatus that displays the inspection result data.

Here, a case was explained in which the image data that is obtained by the inspection apparatuses 11a to 11c in S11 as explained above is processed based on an analysis on the side of the management server 30.

As shown in S11, the image data is obtained to carry out the substrate inspection with the inspection apparatuses 11a to 11c, and is temporarily stored inside the inspection apparatuses 11a to 11c. Here, the control units 13a to 13c serve as holding means. After this, when an analysis or the like has been performed in the management server 30 using the inspection result data, it is decided, depending on the analysis result, whether the image data is deleted, sent to the management server 30 or kept stored in the inspection apparatuses 11a to 11c. Here, the control units 13a to 13c serve as image control means.

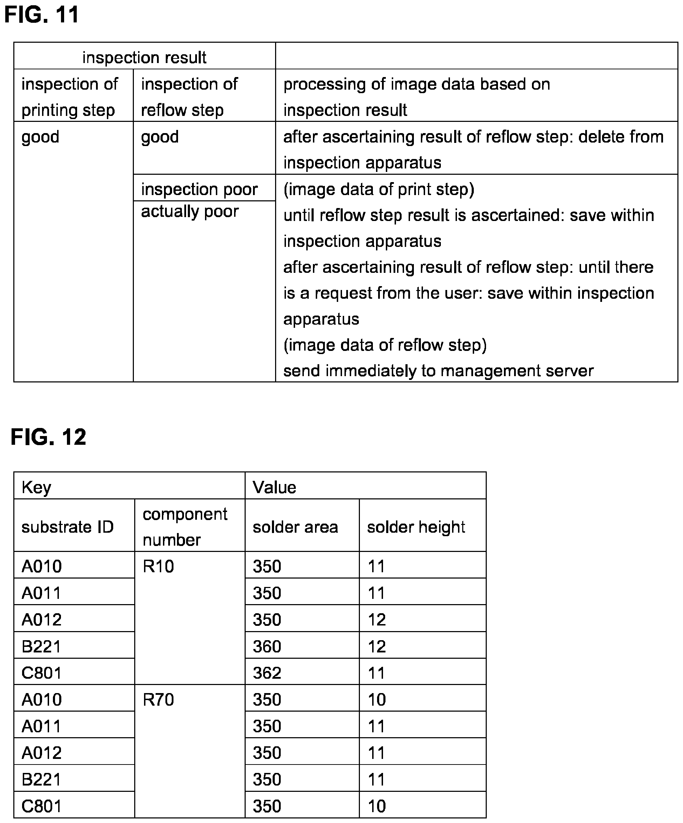

Fig. 11 is a diagram showing an example of the inspection results of the inspection apparatuses 11a to 11c and of the processing of image data depending on the inspection result. As shown in Fig. 11, if the inspection result of the printing step is good, and the inspection result of the reflow step is good, then the image data stored in the first to third inspection apparatuses 11a to 11c are deleted at the time when the inspection result of the reflow step has been ascertained. At this time, the management server 30 may also instruct the first to third inspection apparatuses 11a to 11c to delete the image data. On the other hand, when the inspection result of the printing step is good but the inspection result of the reflow step is poor, the image data of the printing step is stored inside the first inspection apparatus 11a until the inspection result of the reflow step is ascertained, and after the inspection result of the reflow step has been ascertained, the image data is stored inside the first inspection apparatus 11a until there is a request from the user, for example, and is sent to the management server 30 in accordance with the request from the user. Moreover, the image data at the time of the reflow step is sent to the management server 30 immediately when the analyzed result is output.

Thus, it is possible to send only the image data necessary at the necessary time to the management server 30, in accordance with the analysis of the inspection result by the management server 30. In this case, it is possible for the user using the inspection system 10 to determine the capacity for storing the image data based on the load and the state of utilization of the image data, in view of process improvement of the steps. For example, it is possible to make the capacity for storing image data as small as possible.

Moreover, it is possible to send the inspection results to the management server 30 not only when they are poor, but also when they are good.

Moreover, in the above-described embodiment, an example was explained in which the data are aggregated for each machine type during the analysis with the management server 30, but there is no limitation to this, and if there is a plurality of inspected items, then the configuration may also be such that the analysis is possible for each of the inspection items.

Fig. 12 is a diagram showing an example of inspection result data stored, as shown in S13, in the apparatus-side inspection result DB 14c of the inspection apparatus 11c. As shown in Fig. 12, the apparatus-side inspection result DB 14c stores the substrate ID and the product numbers of the products attached to the substrate as the key. Moreover, in the present embodiment, the solder area and the solder height of the components on the substrates are measured as the inspection items, and the measurement results are stored as values associated with the substrate ID. For example, in the component with the substrate ID "A010" and the product number "R10", the solder area is 350 and the solder height is 11.

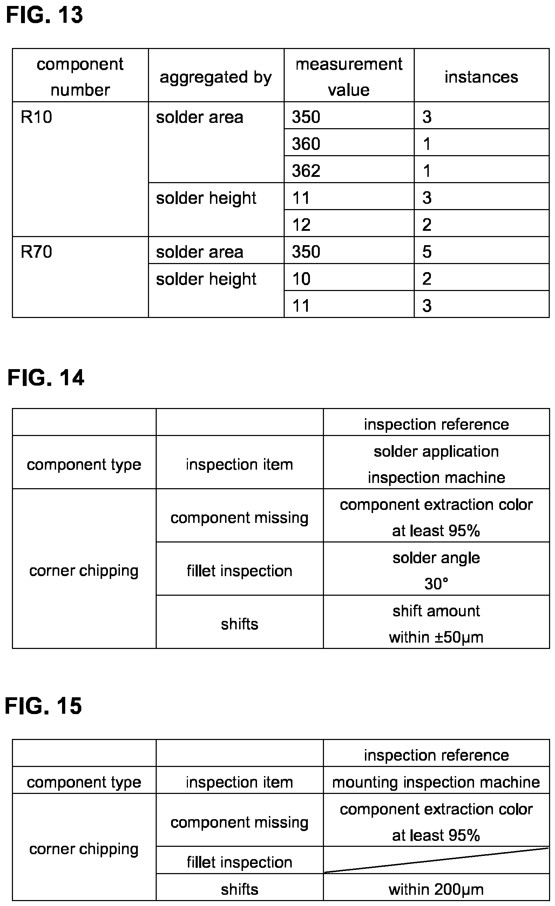

When the management server 30 receives such inspection result data, using the information relating to the substrate inspection stored in the server-side inspection program DB 33, it converts the inspection result data from key-value data to relational data, performs an analysis, and stores the data in the statistical analysis DB 34. Here, the inspection result data for a plurality of substrates is analyzed for each inspection item. Fig. 13 is a diagram illustrating the state of the stored statistical analysis DB 34. As shown in Fig. 13, the management server 30 performs an aggregation into the measured solder areas for each product number. Moreover, also for the solder height, it performs an aggregation into the measured solder heights for each product number. For example, for the product with the product number "R10", there are three data sets for a solder area of 350, and there are three data sets for a solder height of 11.

Thus, it is possible to appreciate the temporal change of the soldering state of the corresponding product. For example, if data indicating that the solder area increases gradually from 350 to 360 etc., then it is possible to recognize that the solder area of the components differs greatly between the first substrate and the tenth substrate. That is to say, it is easy to recognize the change in the inspection points, such as the solder area, for a plurality of substrates.

The following is an explanation of another embodiment of the present invention, in which an analysis is carried out based on information relating to substrate inspection that is stored in the server-side inspection program DB and the server-side inspection program DB.

In this embodiment, a solder inspection machine, a mounting inspection machine, and a solder attachment inspection machine are included as inspection apparatuses. As in the above-described embodiment, the solder inspection machine, the mounting inspection machine, and the solder attachment inspection machine each include an apparatus-side inspection program DB.

As noted above, the apparatus-side inspection program DB stores information relating to the substrate inspection. Fig. 14 is a diagram illustrating information relating to the substrate inspection stored in the solder attachment inspection machine. Fig. 14 shows the information for the inspection of corner chipping. The soldering attachment inspection machine contains the information that, as the inspection of defects, it inspects whether the component extraction color is at least 95%. Moreover, it contains the information that, as the fillet inspection, it inspects whether the solder angle is 30°. Moreover, it contains the information that, as the inspection of shifts, it inspects whether the shift amount is within ±50 µm. This information is contained in the soldering attachment inspection machine.

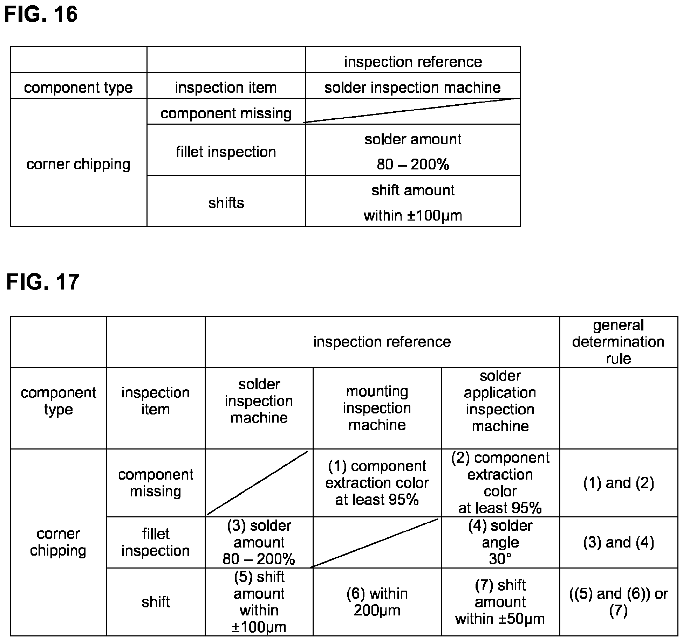

Fig. 15 is a diagram illustrating information relating to the substrate inspection contained in the mounting inspection machine, and Fig. 16 is a diagram illustrating information relating to the substrate inspection contained in the solder inspection machine. For example, as shown in Fig. 16, the solder inspection machine may contain the information that as the fillet inspection, it is inspected whether the solder amount is in the range of 80% to 200%, and as the inspection for shifts, it is inspected whether the shift amount is within ±100 µm.

Thus, the inspection apparatuses contain information serving as criteria for the inspection. Here, the information relating to the substrate inspection contained in the inspection apparatuses is criterion information indicating inspection criteria. Moreover, the criterion information is associated among a plurality of inspection apparatuses. For example, criterion information of different viewpoints may be contained in a single component.

On the other hand, similar to the above-described embodiment, the management server includes a server-side inspection program DB. As noted above, the server-side inspection program DB stores information relating to substrate inspection.

Fig. 17 is a diagram illustrating information relating to substrate inspection stored in the management server. As shown in Fig. 17, the management server contains criterion information for the inspection of all inspection apparatuses, namely the solder inspection machine, the mounting inspection machine and the solder attachment inspection machine. For example, as the criterion information of the solder attachment inspection machine, it may contain the information that, similar to the information shown in Fig. 14, as the inspection of defects, it is inspected whether the product extraction color is at least 95%, as shown in (2) of Fig. 17. Moreover, it contains the information that, as the fillet inspection, it is inspected whether the solder angle is 30°, as shown in (4) of Fig. 17. Moreover, it contains the information that, as the inspection of shifts, it is inspected whether the shift amount is within ±50 µm, as shown in (7) of Fig. 17. Moreover, as the criterion information of the solder inspection machine, it may contain the information that, similar to the information shown in Fig. 16, as the fillet inspection, it is inspected whether the solder amount is in the range of 80% to 200%, as shown in (3) of Fig. 17, and as the inspection of shifts, it is inspected whether the shift amount is within ±100 µm, as shown in (5) of Fig. 17.

Moreover, the management server contains not only criterion information for each inspection apparatus, but also general determination rules for comprehensively determining the criterion information of the various inspection apparatuses. As shown in Fig. 17, a general determination rule is for example that the management server determines "good" for the fillet inspection if, by combining the criterion information of the solder inspection machine ((3) in Fig. 17) and the criterion information of the solder attachment inspection machine ((4) in Fig. 17), it is judged that the criteria are satisfied and judged to be good for both the solder inspection machine and the solder attachment inspection machine. That is to say, the information relating to the substrate inspection contained in the various inspection apparatuses is used in combination by the management server. Consequently, even when the solder inspection machine judges "good", if the solder attachment inspection machine judges "poor", then the management server judges "poor".

Thus, since the information relating to the substrate inspection is shared between the management server and the inspection apparatuses, it is possible to properly carry out the analysis of inspection result data on the management server side. The management server can combine and use the information relating to the substrate inspection contained in the various inspection apparatuses, and can comprehensively analyze the inspection results of the various inspection apparatuses.

### INDUSTRIAL APPLICABILITY

The present invention can be used advantageously where the management of data is necessary.

### INDEX TO THE REFERENCE NUMERALS

10 ... inspection system; 11a, 11b, 11c ... inspection apparatus; 13a, 13b, 13c ... control unit; 14a, 14b, 14c ... apparatus-side inspection result DB; 15a, 15b, 15c ... apparatus-side inspection program DB; 16 ... inspection ID; 17 ... inspection apparatus name; 18 ... inspection date and time; 19 ... inspection result; 30 ... management server; 31 ... control unit; 32 ... server-side inspection result DB; 33 ... server-side inspection program DB; 34 ... statistical analysis DB.

## Claims

1. An inspection data management method comprising:
a step (S11) of inspecting products with an inspection apparatus (11a, 11b, 11c) for inspecting products in a production line to determine whether the products produced are defective;
a step (S12) of storing inspection result data representing results of a plurality of product inspections with the inspection apparatus (11a, 11b, 11c) in an apparatus-side inspection result database (14a, 14b, 14c);
a step (S21) of determining whether a sending condition for sending the inspection result data to a management server (30) is satisfied;
a step (S22) of extracting data that has not been sent to the management server (30) from the inspection result data stored in the apparatus-side inspection result database (14a, 14b, 14c);
and sending (S24), if the sending condition is fulfilled, the data to the management server (30);
a step (S31) of receiving, with the management server (30), the inspection result data sent by the inspection apparatus (11a, 11b, 11c); and
a step (S32) of storing the received inspection result data in a server-side inspection result database (32) of with the management server (30);
a step of storing information relating to the inspection of the product by the inspection apparatus in a server-side inspection program database (33), wherein the information relating to the inspection of the product comprises inspection criteria for determining whether the product produced is defective; and
a step (S43) of converting, at the management server (30), the received inspection result data that is stored in the server-side inspection result database (32) into relational data, based on the information relating to the inspection of the product that is stored in the server-side inspection program database (33);
a step (S44) of storing the converted relational data converted in a statistical analysis database (34), which is a relational database, in order to perform statistical analysis at the management server (30).

2. The method according to claim 1, wherein the converted relational data are analysed, and wherein a statistical analysis of the relational data is performed, and the result is stored in the statistical analysis database (34).

3. The method according to claim 1 or 2, wherein the information relating to the inspection of the product stored in the server-side inspection program database (33) is associated among the plurality of inspection apparatuses (11a, 11b, 11c).

4. The method according to claim 2, further comprising the steps:
obtaining data of an image of the product when inspecting the product;
holding the obtained data of the image of the product; and
determining, based on the result of the analysis performed by the management server, whether the held data of the image of the product is to be deleted, sent to the management server or kept stored in the inspection apparatus (11a, 11b, 11c).

5. An inspection system (1) comprising a plurality of inspection apparatuses (11a, 11b, 11c) provided at individual steps for producing a product along a production line, and a management server (30) that is connected via a communication line to the inspection apparatuses (11a, 11b, 11c),
the inspection apparatuses (11a, 11b, 11c) each comprising:
an apparatus-side storage inspection result database (14a, 14b, 14c); a control unit (13a, 13b, 13c); and
a sending means
the management server comprising:
a receiving means a server-side inspection result database (32);
a server-side inspection program database (33);
a statistical analysis database (34); and
a control unit (31),
wherein the system is configured to carry out the method according to any one of claims 1 to 4.

## Patentansprüche

1. Verfahren zur Verwaltung von Inspektionsdaten, aufweisend:
einen Schritt (S11) des Inspizierens von Produkten mit einer Inspektionsvorrichtung (11a, 11b, 11c) zum Inspizieren von Produkten in einer Produktionslinie, um zu bestimmen, ob die hergestellten Produkte fehlerhaft sind;
einen Schritt (S12) des Speicherns von Inspektionsergebnisdaten, die Ergebnisse von mehreren Produktinspektionen mit der Inspektionsvorrichtung (11a, 11b, 11c) darstellen, in einer vorrichtungsseitigen Inspektionsergebnisdatenbank (14a, 14b, 14c);
einen Schritt (S21) des Bestimmens, ob eine Sendebedingung zum Senden der Inspektionsergebnisdaten an einen Management-Server (30) erfüllt ist;
einen Schritt (S22) des Extrahierens von Daten, die nicht an den Management-Server (30) gesendet wurden, aus den in der vorrichtungsseitigen Inspektionsergebnisdatenbank (14a, 14b, 14c) gespeicherten Inspektionsergebnisdaten;
und Senden (S24), wenn die Sendebedingung erfüllt ist, der Daten an den Management-Server (30);
einen Schritt (S31) des Empfangens der von der Inspektionsvorrichtung (11a, 11b, 11c) gesendeten Inspektionsergebnisdaten mit dem Management-Server (30); und
einen Schritt (S32) des Speicherns der empfangenen Inspektionsergebnisdaten in einer serverseitigen Inspektionsergebnisdatenbank (32) des Management-Servers (30);
einen Schritt des Speicherns von Information, die sich auf die Inspektion des Produkts durch die Inspektionsvorrichtung bezieht, in einer serverseitigen Inspektionsprogrammdatenbank (33), wobei die Information, die sich auf die Inspektion des Produkts bezieht, Inspektionskriterien zum Bestimmen, ob das hergestellte Produkt fehlerhaft ist, umfasst; und
einen Schritt (S43) des Konvertierens, in dem Management-Server (30), der empfangenen Inspektionsergebnisdaten, die in der serverseitigen Inspektionsergebnisdatenbank (32) gespeichert sind, in relationale Daten, basierend auf der Information, die sich auf die Inspektion des Produkts bezieht, und die in der serverseitigen Inspektionsprogrammdatenbank (33) gespeichert ist;
einen Schritt (S44) des Speicherns der umgewandelten relationalen Daten in einer statistischen Analysedatenbank (34), die eine relationale Datenbank ist, um eine statistische Analyse auf dem Management-Server (30) durchzuführen.

2. Verfahren nach Anspruch 1, wobei die konvertierten relationalen Daten analysiert werden, und wobei eine statistische Analyse der relationalen Daten durchgeführt wird, und das Ergebnis in der statistischen Analysedatenbank (34) gespeichert wird.

3. Verfahren nach Anspruch 1 oder 2, wobei die in der serverseitigen Prüfprogrammdatenbank (33) gespeicherten Information über die Prüfung des Produkts den mehreren Prüfgeräten (11a, 11b, 11c) zugeordnet wird.

4. Verfahren nach Anspruch 2, das ferner die Schritte aufweist:
Gewinnen von Daten eines Bildes des Produkts bei der Inspektion des Produkts;
Bereithalten der erhaltenen Daten des Bildes des Produkts; und
Bestimmen, basierend auf dem Ergebnis der von dem Management-Server durchgeführten Analyse, ob die bereitgehaltenen Daten des Bildes des Produkts zu löschen, an den Management-Server zu senden oder in der Inspektionsvorrichtung (11a, 11b, 11c) zu speichern sind.

5. Inspektionssystem (1) mit mehreren Inspektionsvorrichtungen (11a, 11b, 11c), die an einzelnen Schritten zur Herstellung eines Produkts entlang einer Produktionslinie vorgesehen sind, und einem Management-Server (30), der über eine Kommunikationsleitung mit den Inspektionsvorrichtungen (11a, 11b, 11c) verbunden ist,
wobei die Inspektionsvorrichtungen (11a, 11b, 11c) jeweils umfassen:
eine geräteseitige Speicher-Inspektionsergebnisdatenbank (14a, 14b, 14c);
eine Steuereinheit (13a, 13b, 13c); und
ein Sendemittel;
wobei der Management-Server umfasst:
ein Empfangsmittel;
eine serverseitige Inspektionsergebnisdatenbank (32);
eine serverseitige Inspektionsprogrammdatenbank (33);
eine statistische Analysedatenbank (34); und
eine Steuereinheit (31),
wobei das System geeignet ist, das Verfahren nach einem der Ansprüche 1 bis 4 auszuführen.

## Revendications

1. Procédé de gestion de données d'inspection comprenant :
une étape (S11) consistant à inspecter des produits avec un appareil d'inspection (11a, 11b, 11c) pour inspecter des produits dans une ligne de production afin de déterminer si les produits fabriqués sont défectueux ;
une étape (S12) consistant à stocker des données de résultats d'inspection représentant les résultats de plusieurs inspections de produits avec l'appareil d'inspection (11a, 11b, 11c) dans une base de données de résultats d'inspection côté appareil (14a, 14b, 14c) ;
une étape (S21) consistant à déterminer si une condition d'envoi pour envoyer les données de résultats d'inspection à un serveur de gestion (30) est satisfaite ;
une étape (S22) d'extraction des données qui n'ont pas été envoyées au serveur de gestion (30) à partir des données de résultats d'inspection stockées dans la base de données de résultats d'inspection côté appareil (14a, 14b, 14c) ;
et l'envoi (S24), si la condition d'envoi est remplie, des données au serveur de gestion (30) ;
une étape (S31) consistant à recevoir, avec le serveur de gestion (30), les données de résultats d'inspection envoyées par l'appareil d'inspection (11a, 11b, 11c) ; et
une étape (S32) de stockage des données de résultats d'inspection reçues dans une base de données de résultats d'inspection côté serveur (32) du serveur de gestion (30) ;
une étape consistant à stocker une information relative à l'inspection du produit par l'appareil d'inspection dans une base de données de programmes d'inspection côté serveur (33), dans laquelle l'information relative à l'inspection du produit comprend des critères d'inspection pour déterminer si le produit fabriqué est défectueux ; et
une étape (S43) consistant à convertir, au niveau du serveur de gestion (30), les données de résultats d'inspection reçues qui sont stockées dans la base de données de résultats d'inspection côté serveur (32) en données relationnelles, sur la base de l'information relative à l'inspection du produit qui est stockées dans la base de données de programmes d'inspection côté serveur (33) ;
une étape (S44) consistant à stocker les données relationnelles converties dans une base de données d'analyse statistique (34), qui est une base de données relationnelle, afin d'effectuer une analyse statistique au niveau du serveur de gestion (30).

2. Procédé selon la revendication 1, dans lequel les données relationnelles converties sont analysées, et dans lequel une analyse statistique des données relationnelles est effectuée, et le résultat est stocké dans la base de données d'analyse statistique (34).

3. Procédé selon la revendication 1 ou 2, dans lequel l'information relative à l'inspection du produit stockée dans la base de données de programmes d'inspection côté serveur (33) est associée aux plusieurs appareils d'inspection (11a, 11b, 11c).

4. Procédé selon la revendication 2, comprenant en outre les étapes suivantes :
obtention des données d'une image du produit lors de l'inspection du produit ;
conservation des données obtenues de l'image du produit ; et
détermination, sur la base du résultat de l'analyse effectuée par le serveur de gestion, si les données conservées de l'image du produit doivent être supprimées, envoyées au serveur de gestion ou maintenues stockées dans l'appareil d'inspection (11a, 11b, 11c).

5. Système d'inspection (1) comprenant plusieurs appareils d'inspection (11a, 11b, 11c) prévus à des étapes individuelles pour produire un produit le long d'une ligne de production, et un serveur de gestion (30) qui est connecté via une ligne de communication aux appareils d'inspection (11a, 11b, 11c),
les appareils d'inspection (11a, 11b, 11c) comprenant chacun :
une base de données de résultats d'inspection de stockage côté appareil (14a, 14b, 14c) ;
une unité de commande (13a, 13b, 13c) ; et
un moyen d'envoi
le serveur de gestion comprenant :
un moyen de réception ;
une base de données de résultats d'inspection côté serveur (32) ;
une base de données de programmes d'inspection côté serveur (33) ;
une base de données d'analyse statistique (34) ; et
une unité de commande (31),
dans lequel le système est configuré pour exécuter le procédé selon l'une quelconque des revendications 1 à 4.
